# EUROPEAN PATENT APPLICATION

(11) **EP 4 542 667 A1**
(43) Date of publication of application: **23.04.2025**
(21) Application number: 23843039.1
(22) Date of filing: 20.07.2023
(51) Int. Cl.: H01M 4/13, H01M 4/58, H01M 4/62, H01M 10/052, H01M 10/0562

(54) **POSITIVE ELECTRODE ACTIVE MATERIAL LAYER, ELECTRODE, AND SOLID-STATE BATTERY**

(30) Priority: 22.07.2022 JP 2022117060
(71) Applicant: Kureha Corporation, Chuo-ku Tokyo 103-8552 (JP)
(72) Inventor: SUZUKI, Yumeno, Tokyo 103-8552 (JP); WATANABE, Keisuke, Tokyo 103-8552 (JP); OKADA, Kayoko, Tokyo 103-8552 (JP)
(74) Representative: Zimmermann & Partner Patentanwälte mbB
(86) International application number: PCT/JP2023/026599
(87) International publication number: WO 2024/019116

(57) **Abstract**

Provided are a positive electrode active material layer capable of forming a positive electrode in which the interfacial resistance between a current collector and an electrode active material is suppressed, an electrode containing the positive electrode active material layer, and a semi-solid-state battery or all-solid-state battery including the electrode. A positive electrode active material layer including a positive electrode active material (A), a solid electrolyte (B), and a binder (C), the binder (C) being the following polymer (C-a) or polymer (C-b), is used. Polymer (C-a): a homopolymer of vinylidene fluoride having an intrinsic viscosity of 3.5 dL/g or less. Polymer (C-b): a vinylidene fluoride copolymer containing a constituent unit derived from vinylidene fluoride and a constituent unit derived from hexafluoropropylene, having an intrinsic viscosity of 1.3 dL/g or greater and 4.0 dL/g or less, and containing 8.0 mass% or less of the constituent unit derived from hexafluoropropylene with respect to 100.0 mass% of all constituent units of the vinylidene fluoride copolymer.

## Description

### TECHNICAL FIELD

The present invention relates to a positive electrode active material layer, an electrode, and a solid-state battery.

### BACKGROUND ART

Known secondary batteries containing electrolyte solutions had a remarkably high possibility of catching fire when defects, such as internal short-circuit of a cell, occurred in the cell and a temperature of the cell increases. From the viewpoint of improving safety of a cell, a semi-solid-state battery or all-solid-state battery in which most of or all of electrolyte solution is replaced with a solid electrolyte has been studied. Because a semi-solid-state battery or all-solid-state battery contains a minimum amount of or no electrolyte solution with an organic solvent that is flammable, it is conceived that the semi-solid-state battery or all-solid-state battery can simplify a safety device and be excellent in terms of production cost and productivity.

An active material layer of an electrode of a semi-solid or all-solid-state battery is expected to contain a solid electrolyte in addition to an active material, a conductive auxiliary, and a binder constituting an electrode active material layer of a known secondary battery. However, an issue of high interfacial resistance between a current collector and an electrode active material layer exists because transfer of lithium ions and electrons becomes difficult compared to a case where an electrolyte solution is used as an electrolyte.

Meanwhile, for example, Patent Document 1 describes that a positive electrode material for a lithium-sulfur solid-state battery, the positive electrode material containing sulfur, an electrically conductive material, a binder, and an ionic liquid or solvated ion, to suppress interfacial resistance between a solid electrolyte and an electrode.

### Citation List

### Patent Document

Patent Document 1: JP 2017-168435 A

### SUMMARY OF INVENTION

### TECHNICAL PROBLEM

However, when an ionic liquid is used, corrosion of a metal contained in an electrode current collector may occur, and good charging and discharging efficiency may not be achieved. Because of this, a technique of suppressing interfacial resistance between a current collector and an electrode active material layer without use of an ionic liquid is demanded.

The present invention is completed in light of the issues described above, and an object of the present invention is to provide a positive electrode active material layer capable of forming a positive electrode, in which interfacial resistance between a current collector and an electrode active material is suppressed, an electrode containing the positive electrode active material layer, and a semi-solid-state battery or all-solid-state battery including the electrode.

### SOLUTION TO PROBLEM

As a result of diligent research to solve the issues described above, the inventors of the present invention found that the issues described above can be solved by allowing a homopolymer or copolymer of vinylidene fluoride having a specific intrinsic viscosity to be contained as a binder in a positive electrode active material layer containing a positive electrode active material and a solid electrolyte, and thus completed the present invention.

Aspects of the present invention relate to a positive electrode active material layer containing a positive electrode active material (A), a solid electrolyte (B), and a binder (C), an electrode, and a semi-solid-state battery or all-solid-state battery described below.
[1] A positive electrode active material layer including a positive electrode active material (A), a solid electrolyte (B), and a binder (C),
   the binder (C) including a polymer (C-a) or a polymer (C-b) set forth below:
   Polymer (C-a): a homopolymer of vinylidene fluoride having an intrinsic viscosity of 3.5 dL/g or less;
   Polymer (C-b): a vinylidene fluoride copolymer containing a constituent unit derived from vinylidene fluoride and a constituent unit derived from hexafluoropropylene, the vinylidene fluoride copolymer having an intrinsic viscosity of 1.3 dL/g or greater and 4.0 dL/g or less and containing 8.0 mass% or less of a constituent unit derived from hexafluoropropylene with respect to 100.0 mass% of all constituent units of the vinylidene fluoride copolymer.
[2] The positive electrode active material layer according to [1], where an intrinsic viscosity of the polymer (C-a) or the polymer (C-b) is less than 3.0 dL/g.
[3] The positive electrode active material layer according to [1] or [2], where the solid electrolyte (B) is an oxide-based solid electrolyte.
[4] The positive electrode active material layer according to [3], where
   the solid electrolyte (B) includes a material represented by the following Formula (1):

      Li_{1+x+y}AlₓTi₂₋ₓSiyP_{3-y}O₁₂ ... (1)
   where in Formula (1), x and y satisfy 0 ≤ x ≤ 1, 0 ≤ y ≤ 1.
[5] The positive electrode active material layer according to any one of [1] to [4], where
   the positive electrode active material (A) contains a lithium metal phosphate, and
   the lithium metal phosphate is selected from the group consisting of LiFePO₄, LiMnPO₄, LiCoPO₄, and LiNiPO₄.
[6] An electrode including a current collector and the positive electrode active material layer according to any one of [1] to [5].
[7] A semi-solid-state battery or an all-solid-state battery including the electrode according to [6].

### ADVANTAGEOUS EFFECTS OF INVENTION

According to embodiments of the present invention, a positive electrode active material layer capable of forming a positive electrode, in which interfacial resistance between a current collector and an electrode active material is suppressed, an electrode containing the positive electrode active material layer, and a semi-solid-state battery or all-solid-state battery including the electrode can be provided.

### DESCRIPTION OF EMBODIMENTS

### Positive Electrode Active Material Layer

The positive electrode active material layer includes a positive electrode active material (A), a solid electrolyte (B), and a binder (C).

The binder (C) to be included in the positive electrode active material layer is a polymer (C-a) or a polymer (C-b) described below.

Polymer (C-a): a homopolymer of vinylidene fluoride having an intrinsic viscosity of 3.5 dL/g or less.

Polymer (C-b): a vinylidene fluoride copolymer containing a constituent unit derived from vinylidene fluoride and a constituent unit derived from hexafluoropropylene, the vinylidene fluoride copolymer having an intrinsic viscosity of 1.3 dL/g or greater and 4.0 dL/g or less and containing 8.0 wt.% or less of a constituent unit derived from hexafluoropropylene with respect to 100 mass% of all constituent units of the vinylidene fluoride copolymer.

By allowing the specific binder (C) to be contained in the positive electrode active material layer, an electrode, in which interfacial resistance between a current collector and the positive electrode active material layer is suppressed, can be formed.

Hereinafter, essential and optional components contained in the positive electrode active material layer will be described.

### Positive Electrode Active Material (A)

The positive electrode active material (A) is not particularly limited, and for example, a known electrode active material for a positive electrode can be used. As an electrode active material for a positive electrode, a lithium-based electrode active material for a positive electrode, the electrode active material electrode containing at least lithium. Examples of the lithium-based electrode active material for a positive electrode include a positive electrode active material represented by the following Formula (A-1):

LiₓM_{y}O_{z} ... (A-1)

In Formula (A-1), M is a transition metal element, x is from 0.02 to 2.2, y is from 1 to 2, and z is from 1.4 to 4.

In Formula (A-1), M is at least one selected from the group consisting of Co, Mn, Ni, V, Fe, and Si, and may be at least one selected from the group consisting of Co, Ni, and Mn. Specific examples of the positive electrode active material include LiCoO₂, LiMnO₂, LiNiO₂, LiVO₂, LiMn₂O₄, Li(Ni_{0.5}Mn_{1.5})O₄, Li₂FeSiO₄, and Li₂MnSiO₄.

From the viewpoint of suppressing interfacial resistance between a current collector and the positive electrode active material layer, the positive electrode active material represented by Formula (A-1) is preferably a lithium metal oxide represented by the following Formula (A-2):

LiNiₓCo_{y}Mn_{z}O₂ ... (A-2)

where in Formula (A-2), x, y, and z satisfy 0 ≤ x < 1, 0 < y ≤ 1, 0 ≤ z < 1.

In Formula (A-2), a compositional ratio of x, y, and z is, for example, preferably 0.3 ≤ x ≤ 0.8, 0.1 ≤ y ≤ 0.4, and 0.15 ≤ z ≤ 0.5, and more preferably 0.35 ≤ x ≤ 0.7, 0.1 ≤ y ≤ 0.35, and 0.2 ≤ z ≤ 0.45.

Examples of the lithium metal oxide represented by Formula (A-2) include LiNi_{0.33}Co_{0.33}Mn_{0.33} (NCM111), LiNi_{0.5}Co_{0.2}Mn_{0.3}O₂ (NCM523), LiNi_{0.5}Co_{0.3}Mn_{0.2}O₂ (NCM532), LiNi_{0.6}Co_{0.2}Mn_{0.2}O₂ (NCM622), LiNi_{0.8}Co_{0.1}Mn_{0.1} (NCM811), and LiCoO₂ (LCO). Among these, LiNi_{0.5}Co_{0.2}Mn_{0.3}O₂ (NCM523) is preferred.

Examples of the positive electrode active material (A) other than Formula (A-1) above include lithium titanate (e.g., Li₄Ti₅O₁₂), lithium metal phosphate (LiFePO₄, LiMnPO₄, LiCoPO₄, LiNiPO₄), transition metal oxides (V₂O₅, MoO₃), TiS₂, LiCoN, Si, SiO₂, Li₂SiO₃, Li₄SiO₄, and lithium storage intermetallic compounds (e.g., Mg₂Sn, Mg₂Ge, Mg₂Sb, Cu₃Sb). Among these, from the viewpoint of suppressing interfacial resistance between a current collector and the positive electrode active material layer, a lithium metal phosphate is preferred. Among the lithium metal phosphate, LiFePO₄ is more preferred.

The shape of the positive electrode active material (A) is not particularly limited and, for example, may be a particulate form or a thin film form. From the viewpoint of ease in handling, the shape may be a particulate form. When the positive electrode active material is particles, the average particle size (D50) of the particles is, for example, preferably 1 nm or greater and 100 µm or less, and more preferably 10 nm or greater and 30 µm or less.

From the viewpoint of suppressing reaction between the positive electrode active material and a solid electrolyte, the surface of the positive electrode active material (A) may include a coating layer containing a Li-ion conductive oxide. Examples of the Li-ion conductive oxide include LiNbO₃, Li₄TisO₁₂, and Li₃PO₄. The lower limit of the thickness of the coating layer is preferably 0.1 nm or greater, and more preferably 1 nm or greater. The upper limit of the thickness of the coating layer is preferably 100 nm or less, and more preferably 20 nm or less.

The content of the positive electrode active material (A) is not particularly limited and is preferably 50.0 mass% or greater and 98.0 mass% or less, more preferably 60.0 mass% or greater and 95.0 mass% or less, and even more preferably 70.0 mass% or greater and 90.0 mass% or less, with respect to 100.0 mass% of the positive electrode active material layer.

### Solid Electrolyte (B)

As the solid electrolyte (B), a sulfide-based solid electrolyte, an oxide-based solid electrolyte, and the like can be used. From the viewpoints of safety of electrolyte and stability, among these, an oxide-based solid electrolyte is preferably used.

Examples of the sulfide-based solid electrolyte include Li₂S-SiS₂, Lil-Li₂S-SiS₂, Lil-Li₂S-P₂S₅, Lil-Li₂O-Li₂S-P₂S₅, LiI-Li₂S-P₂O₅, Lil-Li₃PO₄-P₂S₅, Li₂S-P₂S₅, and Li₃PS₄.

Examples of the oxide-based solid electrolyte include an LLTO-based compound ((La, Li)TiO₃), Li₆La₂CaTa₂O₁₂, Li₆La₂ANb₂O₁₂ (A: alkaline earth metal), Li₂Nd₃TeSbO₁₂, Li₃BO_{2.5}N_{0.5}, Li₉SiAlO₈, an LAGP-based compound (Li₁₊ₓAlₓGe₂₋ₓ(PO4)₃ (0 ≤ x ≤ 1)), an LATP-based compound (Li₁₊ₓAlₓTi₂₋ₓ(PO₄)₃ (0 ≤ x ≤ 1)) such as Li₂O-Al₂O₃-TiO₂-P₂O₅, Li₁₊ₓTi₂₋ₓAlₓSi_{y}(PO₄)_{3-y}(0 ≤ x ≤ 1, 0 ≤ y ≤ 1), Li_{1+y}AlₓM₂₋ₓ(PO₄)₃ (M is one or two or more elements selected from the group consisting of Ti, Ge, Sr, Sn, Zr, and Ca, 0 ≤ x ≤ 1, 0 ≤ y ≤ 1), LiTiₓZr₂₋ₓ(PO₄)₃ (0 ≤ x ≤ 1), LISICON (Li₄₋₂ₓZnₓGeO₄ (0 ≤ x ≤ 1)), a LIPON-based compound (Li_{3+y}PO₄₋ₓNₓ (0 ≤ x ≤ 1, 0 ≤ y ≤ 1)), a NASICON-based compound (e.g., LiTi₂(PO₄)₃), and a garnet-based compound (e.g., Li₇La₃Zr₂O₁₂, Li₇₋ₓLa₃Zr₁₋ₓNbₓO₁₂ (0 ≤ x ≤ 1)).

Among the oxide-based solid electrolytes, an LATP-based compound is preferred from the viewpoint of having high lithium ion conductivity. For the LATP-based compound, a material represented by the following Formula (1) is preferably contained:

Li_{1+x+y}AlₓTi₂₋ₓSiyP_{3-y}O₁₂ ... (1)

In Formula (1), x and y satisfy 0 ≤ x ≤ 1 and 0 ≤ y ≤1.

Examples of preferred oxide-based solid electrolyte other than the LATP-based compound described above include Li₇La₃Zr₂O₁₂ (LLZO), Li_{6.75}La₃Zr_{1.75}Ta_{0.25}O₁₂ (LLZTO), Li_{0.33}La_{0.56}TiO₃ (LLTO), and Li_{1.6}Al_{0.6}Ge_{1.4}(PO₄)₃(LAGP).

The content of the solid electrolyte (B) is not particularly limited and is preferably 1.0 mass% or greater and 40.0 mass% or less, more preferably 2.0 mass% or greater and 20.0 mass% or less, and even more preferably 5.0 mass% or greater and 15.0 mass% or less, with respect to 100.0 mass% of the positive electrode active material layer.

### Binder (C)

Binder (C) is the following polymer (C-a) or polymer (C-b).

Polymer (C-a): A homopolymer of vinylidene fluoride having an intrinsic viscosity of 3.5 dL/g or less.

Polymer (C-b): A vinylidene fluoride copolymer containing a constituent unit derived from vinylidene fluoride and a constituent unit derived from hexafluoropropylene, the vinylidene fluoride copolymer having an intrinsic viscosity of 1.3 dL/g or greater and 4.0 dL/g or less and containing 8.0 wt.% or less of a constituent unit derived from hexafluoropropylene with respect to 100.0 mass% of all constituent units of the vinylidene fluoride copolymer.

The polymer (C-a) or the polymer (C-b) is used to suppress interfacial resistance between a current collector and the positive electrode active material layer.

Note that, hereinafter, in a case where the polymer (C-a) and the polymer (C-b) are not needed to be distinguished, the polymer (C-a) and the polymer (C-b) will be described simply as the "binder (C)".

### Polymer (C-a)

From the viewpoint of suppressing interfacial resistance between a current collector and the positive electrode active material layer, the upper limit of the intrinsic viscosity of the polymer (C-a) is 3.5 dL/g or less, preferably less than 3.0 dL/g, and more preferably less than 2.5 dL/g.

The lower limit of the intrinsic viscosity of the polymer (C-a) is not particularly limited; however, from the viewpoint of production, the lower limit is preferably 0.3 dL/g or greater, and more preferably 0.5 dL/g or greater. That is, in a case where a polymer (C-a) having an intrinsic viscosity of less than 0.3 dL/g is prepared, a concentration of a monomer needs to be lower, or an excessive mount of a chain transfer agent described below needs to be used. When polymerization is performed under such conditions, polymerization speed becomes remarkably slow and, in a case where suspension polymerization described below is performed, it may be difficult to maintain suspension stability.

### Polymer (C-b)

**The** constituent unit of the polymer (C-b) may contain a constituent unit derived from another monomer that is different from the vinylidene fluoride (VDF) and the hexafluoropropylene (HFP) described above in a range that does not impair the effects of an embodiment of the present invention. Examples of such another monomer include a monomer containing a polar functional group that can be hydrogen-bonded (preferably carboxyl group-containing monomer). Examples of the carboxyl group-containing monomer that can be copolymerized with vinylidene fluoride include an unsaturated monobasic acid, such as acrylic acid, methacrylic acid, 2-carboxyethyl acrylate, and 2-carboxyethyl methacrylate; an unsaturated dibasic acid, such as maleic acid and citraconic acid; a monoester of an unsaturated dibasic acid, such as monomethyl maleate, monoethyl maleate, monomethyl citraconate, and monoethyl citraconate; acryloyloxy ethyl succinate, acryloyloxy propyl succinate, methacryloyloxy ethyl succinate, and methacryloyloxy propyl succinate.

The content of the constituent unit derived from hexafluoropropylene (HFP) in the polymer (C-b) is 8.0 mass% or less, and preferably 7.5 mass% or less, with respect to 100 mass% of all constituent units of the polymer (C-b).

In a case where a constituent unit derived from monomethyl maleate (MMM) is contained in the polymer (C-b), the content of the constituent unit is not particularly limited; however, the content is preferably 1.0 mass% or less, and more preferably 0.6 mass% or less, with respect to 100 mass% of all constituent units of the polymer (C-b).

From the viewpoint of suppressing interfacial resistance between a current collector and the positive electrode active material layer, the upper limit of the intrinsic viscosity of the polymer (C-b) is 4.0 dL/g or less, preferably less than 3.0 dL/g, and more preferably less than 2.5 dL/g.

From the viewpoint of suppressing interfacial resistance between a current collector and the positive electrode active material layer, the lower limit of the intrinsic viscosity of the polymer (C-b) is preferably 1.3 dL/g or greater, and more preferably 1.6 dL/g or greater.

The polymer (C-a) and the polymer (C-b) may each be used alone, or a combination thereof may be used.

The content of the binder (C) is not particularly limited and is preferably 1.0 mass% or greater and 40.0 mass% or less, more preferably 2.0 mass% or greater and 30.0 mass% or less, and even more preferably 3.0 mass% or greater and 20.0 mass% or less, with respect to 100.0 mass% of the positive electrode active material layer.

### Method for Producing Binder (C)

The method for producing the binder (C) is not particularly limited, and is typically a method such as suspension polymerization, emulsion polymerization, or solution polymerization. From the viewpoint of ease in post-treatment and the like, suspension polymerization in an aqueous system and emulsion polymerization are preferred, and suspension polymerization in an aqueous system is more preferred.

The suspension polymerization method in an aqueous system is not particularly limited, and examples thereof include a method of polymerizing a monomer to be used in polymerization in an aqueous medium in the presence of a suspending agent, a polymerization initiator, and a chain transfer agent.

The suspending agent is not particularly limited, and examples thereof include methyl cellulose, methoxylated methyl cellulose, propoxylated methyl cellulose, hydroxyethyl methyl cellulose, hydroxypropyl methyl cellulose, polyvinyl alcohol, polyethylene oxide, and gelatin. The used amount of the suspending agent is not particularly limited and, for example, is preferably 0.005 parts by mass or greater and 1.0 part by mass or less, and more preferably 0.01 parts by mass or greater and 0.4 parts by mass or less, with respect to 100 parts by mass of all monomers used in the polymerization.

The polymerization initiator is not particularly limited, and examples thereof include diisopropyl peroxydicarbonate, di-n-propyl peroxydicarbonate, di-n-heptafluoropropyl peroxydicarbonate, iso-butyryl peroxide, di(chlorofluoroacyl)peroxide, di(perfluoroacyl)peroxide, and t-butyl peroxypivalate. The used amount of the polymerization initiator is not particularly limited and, for example, is preferably 0.05 parts by mass or greater and 5.0 part by mass or less, and more preferably 0.15 parts by mass or greater and 2.0 parts by mass or less, with respect to 100.0 parts by mass of all monomers used in the polymerization.

The chain transfer agent is not particularly limited, and examples thereof include ethyl acetate, propyl acetate, acetone, and diethyl carbonate.

The used amount of the monomer to be used in the polymerization is, in terms of a mass ratio of total of monomers:water, typically from 1:1 to 1:10, and preferably from 1:2 to 1:5. The polymerization conditions such as polymerization temperature and polymerization time when the suspension polymerization is performed are not particularly limited and, for example, known polymerization conditions may be employed. The polymerization temperature T is selected as appropriate according to the 10-hour half-life temperature T10 of the polymerization initiator, and is normally selected in the range of T10 - 25°C ≤ T ≤ T10 + 25°C. For example, T10 of t-butyl peroxy pivalate and diisopropyl peroxy dicarbonate are 54.6°C and 40.5°C, respectively (refer to product catalog of NOF Corporation). Therefore, in polymerization using t-butyl peroxy pivalate and diisopropyl peroxy dicarbonate as a polymerization initiator, the polymerization temperature T is selected as appropriate in a range of 29.6°C ≤ T ≤ 79.6°C and 15.5°C ≤ T ≤ 65.5°C, respectively. Although the polymerization time is not particularly limited, the polymerization time is preferably from 1 to 24 hours considering productivity, for example.

### Other components

The positive electrode active material layer may contain components other than the positive electrode active material (A), the solid electrolyte (B), and the binder (C) described above (hereinafter, also referred to as "other components") as long as the effects of an embodiment of the present invention are not impaired. As such other components, any known additives can be used. Examples of such other components include a conductive auxiliary, an insulating inorganic filler such as alumina, magnesia, and silica, an insulating organic filler such as polytetrafluoroethylene, polyimide, and polyacrylonitrile, a plasticizer such as ethylene carbonate, propylene carbonate, and ethyl methyl carbonate, a Li salt such as LiPF₆, LiFSI, and LiTFSI, a dispersing agent, a flame retardant, and an antifoaming agent.

Examples of the conductive auxiliary (D) include carbon black and carbon nanotubes. One of these may be used alone, or two or more may be used in combination.

The content of the conductive auxiliary (D) is not particularly limited and is preferably 0.05 mass% or greater and 15.0 mass% or less, more preferably 0.1 mass% or greater and 10.0 mass% or less, and even more preferably 0.5 mass% or greater and 8.0 mass% or less, with respect to 100.0 mass% of the positive electrode active material layer.

### Electrode

The electrode means a positive electrode. The electrode includes a current collector and the positive electrode active material layer described above.

By the included positive electrode active material layer described above, the electrode achieves an effect of suppressing interfacial resistance between the current collector and the positive electrode active material layer.

### Current collector

A current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium.

The bulk density of the electrode is not particularly limited and, for example, is preferably 1.5 g/cm³ or greater and 5.0 g/cm³ or less.

The basis weight of the electrode is not particularly limited and, for example, is preferably 20 g/m² or greater and 1000 g/m² or less.

### Method for Producing Electrode

Examples of the method for producing the electrode include an aspect including a process of producing a positive electrode slurry by mixing the positive electrode active material (A), the solid electrolyte (B), and the binder (C) described above and, as necessary, other components, and a non-aqueous solvent (S), and a process of drying after application of the obtained positive electrode slurry onto a current collector. That is, in the embodiment described above, an electrode is produced in addition to the positive electrode active material layer being produced after the process of drying the positive electrode slurry.

Examples of the non-aqueous solvent (S) include N-methyl-2-pyrrolidone (hereinafter, also referred to as "NMP"), dimethylformamide, N-dimethylformamide, N,N-dimethylacetamide, dimethyl sulfoxide, N,N-dimethyl sulfoxide, hexamethylphosphoramide, dioxane, tetrahydrofuran, tetramethylurea, triethyl phosphate, trimethyl phosphate, acetone, cyclohexanone, methyl ethyl ketone, and tetrahydrofuran. One of these may be used alone, or two or more may be used in combination.

The method of application is not particularly limited and, for example, a doctor blade method, a reverse roll method, a comma bar method, a gravure method, an air knife method, a die coating method, and a dip coating method can be used.

The drying temperature is, for example, preferably 80°C or higher and 300°C or lower, more preferably 90°C or higher and 200°C or lower, and even more preferably 100°C or higher and 180°C or lower.

The drying time is, for example, preferably 10 seconds or longer and 300 minutes or shorter, and more preferably 1 minute or longer and 200 minutes or shorter. The drying may be performed multiple times at various temperatures. During the drying, pressure may be applied.

### All-Solid-State Battery

The all-solid-state battery includes the electrode of the embodiment described above. The all-solid-state battery can use known components other than the positive electrode, such as a negative electrode and a separator.

### Semi-Solid-State Battery

The semi-solid-state battery includes the electrode of the embodiment described above. The semi-solid-state battery can use known components other than the positive electrode, such as a negative electrode and a separator. The amount of the electrolyte solution contained in the semi-solid-state battery is preferably from 1.0 to 95.0%, more preferably from 1.0 to 90.0%, and even more preferably from 1.0 to 80.0%, when the volume of an electrolyte solution contained in a known secondary battery containing the electrolyte solution is 100.0%.

### EXAMPLES

The present invention will be described in further detail below based on Examples and Comparative Examples, but the present invention is not limited to the following examples.

### Examples 1 to 10 and Comparative Examples 1 to 5

### Used Material

In Examples and Comparative Examples, the following A1 and A2 were used as the positive electrode active materials (A).
A1: LiFePO₄
A2: NCM523

In Examples and Comparative Examples, the following B1 was used as the solid electrolyte (B).
B1: Li_{1+x+y}AlₓTi₂ₓSi_{y}P_{3y}O₁₂ (LATP) ("LICGC^{™}PW-01 (particle size: 1 µm)", available from Ohara Inc.)

In Examples and Comparative Examples, the following C1 to C12 were produced and used as the binders (C). The intrinsic viscosity of each of the produced binders was measured by the following method.

### Measurement of Intrinsic Viscosity

80 mg of each of the binders was dissolved in 20 mL of N,N-dimethylformamide, and a binder-containing solution was prepared. Then, the viscosity η₁ of the binder-containing solution was measured in a thermostatic bath at 30°C using an Ubbelohde viscometer. Similarly, the viscosity η₀ of N,N-dimethylformamide was measured in a thermostatic bath at 30°C using the Ubbelohde viscometer. Then, the intrinsic viscosity η was determined based on the following equation. Intrinsic viscosity η = (1/C) · In (η₁/η₀)

### Preparation Example of Binder C1 (PVDF)

In an autoclave with an internal capacity of 2 liters, 253.0 parts by mass of ion-exchanged water, 0.05 parts by mass of methyl cellulose, 100 parts by mass of vinylidene fluoride (VDF), 0.6 parts by mass of di-n-propyl peroxydicarbonate, 0.6 parts by mass of methanol, and 1.4 parts by mass of ethyl acetate were charged, and polymerization was initiated at 26°C. Thereafter, the temperature was increased, and the suspension polymerization was performed at 40°C for 12 hours. After completion of the polymerization, the obtained polymer slurry was heat-treated at 95°C for 30 minutes, the polymer slurry was dehydrated, washed with water, and further dried at 80°C for 20 hours, and thus the binder C1 was obtained. The binder C1 contained 100.0 mass% of the VDF with respect to all constituent units. The intrinsic viscosity (η) of the binder C1 was 1.1 dL/g.

### Preparation Example of Binder C2 (PVDF)

In an autoclave with an internal capacity of 2 liters, 231.8 parts by mass of ion-exchanged water, 0.05 parts by mass of methyl cellulose, 100 parts by mass of VDF, 0.7 parts by mass of di-i-propyldioxydicarbonate (IPP), and 0.7 parts by mass of ethyl acetate were charged. VDF was polymerized by the method same as Preparation Example of the binder C1, and thus a binder C2 was obtained. The binder C2 contained 100.0 mass% of the VDF with respect to all constituent units. The intrinsic viscosity (η) of the binder C2 was 2.1 dL/g.

### Preparation Example of Binder C3 (PVDF)

VDF was polymerized by the method same as Preparation Example of the binder C2 except for changing the charged amounts to 213.8 parts by mass of the ion-exchanged water, 0.3 parts by mass of the IPP, and 0.42 parts by mass of the ethyl acetate, and thus a binder C3 was obtained. The binder C3 contained 100.0 mass% of the VDF with respect to all constituent units. The intrinsic viscosity (η) of the binder C3 was 3.1 dL/g.

### Preparation Example of Binder C4 (PVDF)

VDF was polymerized by the method same as Preparation Example of the binder C1 except for changing the charged amounts to 312.5 parts by mass of the ion-exchanged water, 3.5 parts by mass of diethyl carbonate, 100 parts by mass of the VDF, 0.13 parts by mass of t-butyl peroxypivalate, and 0.1 parts by mass of the ethyl acetate, and thus a binder C4 was obtained. The binder C4 contained 100.0 mass% of the VDF with respect to all constituent units. The intrinsic viscosity (η) of the binder C4 was 0.3 dL/g.

### Preparation Example of Binder C5 (VDF/HFP)

In an autoclave with an internal capacity of 2 liters, 290 parts by mass of ion-exchanged water, 0.15 parts by mass of methyl cellulose, 57.9 parts by mass of vinylidene fluoride (VDF), 7.8 parts by mass of hexafluoropropylene (HFP), and 0.9 parts by mass of diisopropylperoxydicarbonate were charged and polymerized at 45°C. 34.3 parts by mass of VDF was then charged, and thus a copolymer was obtained. The obtained copolymer was heat-treated at 95°C for 60 minutes, then dehydrated, washed with water, and further dried at 80°C for 20 hours, and thus a binder C5 was obtained. The binder C5 contained 94.3 mass% of the VDF and 5.7 mass% of the HFP with respect to all constituent units. The intrinsic viscosity (η) of the binder C5 was 1.5 dL/g.

### Preparation Example of Binder C6 (VDF/HFP)

VDF and HFP were polymerized by the method same as Preparation Example of the binder C1 except for using 253.0 parts by mass of ion-exchanged water, 0.05 parts by mass of methyl cellulose, 90.0 parts by mass of VDF, 10.0 parts by mass of HFP, 0.4 parts by mass of IPP, and 1.0 part by mass of the ethyl acetate, and thus a binder C6 was obtained. The binder C6 contained 93.0 mass% of the VDF and 7.0 mass% of the HFP with respect to all constituent units. The intrinsic viscosity (η) of the binder C6 was 1.9 dL/g.

### Preparation Example of Binder C7 (VDF/HFP/MMM)

VDF, HFP, and MMM were polymerized by the method same as Preparation Example of the binder C1 except for using 240.2 parts by mass of ion-exchanged water, 0.2 parts by mass of methyl cellulose, 96.7 parts by mass of VDF, 3.0 parts by mass of HFP, 0.3 parts by mass of monomethyl maleate (MMM), and 0.47 parts by mass of IPP, and thus a binder C7 was obtained. The amount of each monomer in the binder C7 was determined by calculating a VDF/HFP ratio based on 19F-NMR, calculating a VDF/MMM ratio using the method described below, and then calculating in a manner that the total of the VDF, the HFP, and the MMM became 100 mol%.

The VDF/MMM ratio in the polymer (the molar ratio of the amount of the constituent unit derived from vinylidene fluoride to the amount of the constituent unit derived from monomethyl maleate) was calculated on the basis of the calculation method using an IR spectrum and a calibration curve disclosed in WO 2009/084483. The binder C7 contained 97.4 mass% of the VDF, 2.3 mass% of the HFP, and 0.3 mass% of the MMM with respect to all constituent units. The intrinsic viscosity (η) of the binder C7 was 3.0 dL/g.

### Preparation Example of Binder C8 (VDF/CTFE)

VDF and CTFE were polymerized by the method same as Preparation Example of the binder C1 except for using 256.6 parts by mass of ion-exchanged water, 0.05 parts by mass of methyl cellulose, 96.0 parts by mass of VDF, 4.0 parts by mass of chlorotrifluoroethylene (CTFE), 0.6 parts by mass of IPP, and 0.59 part by mass of ethyl acetate, and thus a binder C8 was obtained. The binder C8 contained 96.0 mass% of the VDF and 4.0 mass% of the CTFE with respect to all constituent units. The intrinsic viscosity (η) of the binder C8 was 2.1 dL/g.

### Preparation Example of Binder C9 (VDF/HFP/MMM)

VDF, HFP, and MMM were polymerized by the method same as Preparation Example of the binder C1 except for using 259.0 parts by mass of ion-exchanged water, 0.2 parts by mass of methyl cellulose, 90 parts by mass of VDF, 10 parts by mass of HFP, 0.5 parts by mass of MMM, 2.0 parts by mass of IPP, and 0.17 part by mass of ethyl acetate, and thus a binder C9 was obtained. The binder C9 contained 93.3 mass% of the VDF, 6.2 mass% of the HFP, and 0.5 mass% of the MMM with respect to all constituent units. The intrinsic viscosity (η) of the binder C9 was 1.2 dL/g.

### Preparation Example of Binder C10 (VDF/HFP/MMM)

VDF, HFP, and MMM were polymerized by the method same as Preparation Example of the binder C1 except for using 243.1 parts by mass of ion-exchanged water, 0.2 parts by mass of methyl cellulose, 86.0 parts by mass of VDF, 13.5 parts by mass of HFP, 0.5 parts by mass of MMM, and 1.77 parts by mass of IPP, and thus a binder C10 was obtained. The binder C10 contained 89.5 mass% of the VDF, 10.0 mass% of the HFP, and 0.5 mass% of the MMM with respect to all constituent units. The intrinsic viscosity (η) of the binder C10 was 1.5 dL/g.

### Preparation Example of Binder C11 (PVDF)

VDF was polymerized by the method same as Preparation Example of the binder C1 except for using 217 parts by mass of ion-exchanged water, 0.05 parts by mass of methyl cellulose, 100 parts by mass of VDF, 0.09 parts by mass of IPP, and 0.25 part by mass of ethyl acetate, and thus a binder C11 was obtained. The binder C11 contained 100.0 mass% of the VDF with respect to all constituent units. The intrinsic viscosity (η) of the binder C11 was 4.2 dL/g.

### Preparation Example of Binder C12 (VDF/HFP)

VDF and HFP were polymerized by the method same as Preparation Example of the binder C1 except for using 256.0 parts by mass of ion-exchanged water, 0.05 parts by mass of methyl cellulose, 90.0 parts by mass of VDF, 10 parts by mass of HFP, 0.1 parts by mass of IPP, and 0.2 parts by mass of ethyl acetate, and thus a binder C12 was obtained. The binder C12 contained 93.0 mass% of the VDF and 7.0 mass% of the HFP with respect to all constituent units. The intrinsic viscosity (η) of the binder C12 was 4.4 dL/g.

Detailed information of the obtained binders C1 to C12 are listed in Table 1.

**[Table 1]**

| Binder (C) | Type | Composition | Content of constituent unit derived from each monomer (mass%) | | | | η (dL/g) |
|---|---|---|---|---|---|---|---|
| | | | VDF | HFP | MMM | CTFE | |
| C1 | C-a | PVDF | 100.0 | - | - | - | 1.1 |
| C2 | C-a | PVDF | 100.0 | - | - | - | 2.1 |
| C3 | C-a | PVDF | 100.0 | - | - | - | 3.1 |
| C4 | C-a | PVDF | 100.0 | - | - | - | 0.3 |
| C5 | C-b | VDF/HFP | 94.3 | 5.7 | - | - | 1.5 |
| C6 | C-b | VDF/HFP | 93.0 | 7.0 | - | - | 1.9 |
| C7 | C-b | VDF/HFP/M MM | 97.4 | 2.3 | 0.3 | - | 3.0 |
| C8 | C-b | VDF/CTFE | 96.0 | - | - | 4.0 | 2.1 |
| C9 | C-b | VDF/HFP/M MM | 93.3 | 6.2 | 0.5 | - | 1.2 |
| C10 | C-b | VDF/HFP/M MM | 89.5 | 10.0 | 0.5 | - | 1.5 |
| C11 | C-a | PVDF | 100.0 | - | - | - | 4.2 |
| C12 | C-b | VDF/HFP | 93.0 | 7.0 | - | - | 4.4 |

In Examples and Comparative Examples, the following D1 and D2 were used as the conductive auxiliaries (D).
D1: Carbon nanotube (CNT) dispersion
D2: Super P

In Examples and Comparative Examples, the following S1 was used as the non-aqueous solvent (S).
S1: N-methyl-2-pyrrolidone (NMP)

### Production of Positive Electrode Slurry

Each of the binders (C) was dispersed in N-methyl-2-pyrrolidone (NMP) at room temperature so that the concentration of the binder (C) became a freely chosen concentration, and then the solution temperature was raised to 50°C to dissolve the binder (C) (hereinafter, referred to as "binder solution"). Using the positive electrode active material (A), the solid electrolyte (B), the conductive auxiliary (D), and each of the binder solutions described above, the components were mixed in a manner that the contents became those listed in Table 2 below, and thus each positive electrode slurry was obtained. The solid content of the positive electrode slurry was adjusted by using NMP.

### Production of Cathode

After each of the obtained positive electrode slurries was applied on an Al foil (thickness: 15 µm), the positive electrode slurry was dried at 120°C. Each of the obtained preparatory positive electrode was pressed and subjected to heat treatment at 120°C for 3 hours. By this, each positive electrode was obtained, the positive electrode having an electrode bulk density of 2.3 g/cm³ in a case where LiFePO₄ was used as the active material or an electrode bulk density of 3.3 g/cm³ in a case where NCM523 was used as the active material, and having a basis weight of 200 g/m² in a case where any active material was used.

### Evaluation

The electrode resistance of each of the obtained positive electrode was measured in accordance with the following method.

### Interfacial Resistance

Each of the prepared positive electrodes was punched into ϕ14 mm, and three sheets total of measurement samples were prepared. Using Electrode Resistance Measurement System RM2610 (Hioki E.E. Corporation), five-point measurement was performed for one sheet of the measurement sample. The interfacial resistance (Ω·cm²) was determined based on an average value of a total of 15 measurement data. The results are indicated in Table 2.

**[Table 2]**

| Positive electrode active material layer | Positive electrode active material (A) | Solid electrolyte (B) | Binder (C) | Conductive auxiliary (D) | Interfacial resistance (Ω·cm²) |
|---|---|---|---|---|---|
| | Type/part by mass | Type/part by mass | Type/part by mass | Type/part by mass | |
| Example 1 | A1/90 | B1/10 | C1/10 | D1/2 | 0.27 |
| Example 2 | A1/90 | B1/10 | C2/10 | D1/2 | 0.40 |
| Example 3 | A1/90 | B1/10 | C3/10 | D1/2 | 0.50 |
| Example 4 | A1/90 | B1/10 | C4/10 | D1/2 | 0.24 |
| Example 5 | A1/90 | B1/10 | C5/10 | D1/2 | 0.38 |
| Example 6 | A1/90 | B1/10 | C6/10 | D1/2 | 0.21 |
| Example 7 | A1/90 | B1/10 | C7/10 | D1/2 | 0.56 |
| Example 8 | A1/85 | B1/15 | C6/10 | D1/2 | 0.38 |
| Example 9 | A1/95 | B1/5 | C6/10 | D1/2 | 0.38 |
| Example 10 | A2/90 | B1/10 | C6/10 | D2/2 | 0.19 |
| Comparative Example 1 | A1/90 | B1/10 | C8/10 | D1/2 | 0.74 |
| Comparative Example 2 | A1/90 | B1/10 | C9/10 | D1/2 | 0.79 |
| Comparative Example 3 | A1/90 | B1/10 | C10/10 | D1/2 | 0.84 |
| Comparative Example 4 | A1/90 | B1/10 | C11/10 | D1/2 | 1.03 |
| Comparative Example 5 | A1/90 | B1/10 | C12/10 | D1/2 | 0.81 |

In Table 2, the positive electrode of Comparative Example 4, which included the positive electrode active material layer containing the binder C11 (PVDF) having an intrinsic viscosity of greater than 3.5 dL/g, had the interfacial resistance of 1.03 Ω·cm². Meanwhile, as is clear from Examples 1 to 4, the positive electrodes including the positive electrode active material layers containing the binders C1 to C4 (all PVDF) having intrinsic viscosities of 3.5 dL/g or less had a maximum interfacial resistance of only 0.50 Ω·cm², and it was clear that the interfacial resistance between the current collector and the electrode active material was remarkably suppressed.

The positive electrodes of Comparative Examples 2, 3, and 5 each including the positive electrode active material layer containing the binder C9 (VDF/HFP/MMM) having an intrinsic viscosity of less than 1.3 dL/g, the binder C12 (VDF/HFP) having an intrinsic viscosity of greater than 4.0 dL/g, or the binder C10 (VDF/HFP/MMM) containing greater than 8 mass% of constituent unit derived from HFP had a minimum interfacial resistance of 0.79 Ω·cm².

Meanwhile, as is clear from Examples 5 to 7, the positive electrodes including the positive electrode active material layers containing the binders C5 and C6 (VDF/HFP) having an intrinsic viscosity of 1.3 dL/g or greater and 4.0 dL/g or less and containing 8 mass% or less of constituent unit derived from HFP and the binder C7 (VDF/HFP/MMM) had a maximum interfacial resistance of only 0.56 Ω·cm², and it was clear that the interfacial resistance between the current collector and the electrode active material was suppressed.

Meanwhile, as is clear from Comparative Example 1, the positive electrode including the positive electrode active material layer containing the binder C8 (VDF/CTFE) containing a constituent unit derived from CTFE in place of the HFP although the intrinsic viscosity was in the range described above had the interfacial resistance of 0.74 Ω·cm².

## Claims

1. A positive electrode active material layer comprising a positive electrode active material (A), a solid electrolyte (B), and a binder (C),
the binder (C) comprising a polymer (C-a) or a polymer (C-b) set forth below:
polymer (C-a): a homopolymer of vinylidene fluoride having an intrinsic viscosity of 3.5 dL/g or less;
polymer (C-b): a vinylidene fluoride copolymer comprising a constituent unit derived from vinylidene fluoride and a constituent unit derived from hexafluoropropylene, the vinylidene fluoride copolymer having an intrinsic viscosity of 1.3 dL/g or greater and 4.0 dL/g or less and containing 8.0 mass% or less of the constituent unit derived from hexafluoropropylene with respect to 100.0 mass% of all constituent units of the vinylidene fluoride copolymer.

2. The positive electrode active material layer according to claim 1, wherein an intrinsic viscosity of the polymer (C-a) or the polymer (C-b) is less than 3.0 dL/g.

3. The positive electrode active material layer according to claim 1 or 2, wherein the solid electrolyte (B) is an oxide-based solid electrolyte.

4. The positive electrode active material layer according to claim 3, wherein
the solid electrolyte (B) comprises a material represented by Formula (1):
Li_{1+x+y}AlₓTi₂₋ₓSiyP_{3-y}O₁₂ ... (1)
where in Formula (1), x and y satisfy 0 ≤ x ≤ 1, 0 ≤ y ≤ 1.

5. The positive electrode active material layer according to claim 1 or 2, wherein
the positive electrode active material (A) comprises a lithium metal phosphate, and
the lithium metal phosphate is selected from the group consisting of LiFePO₄, LiMnPO₄, LiCoPO₄, and LiNiPO₄.

6. An electrode comprising a current collector and the positive electrode active material layer described in claim 1 or 2.

7. A semi-solid-state battery or an all-solid-state battery comprising the electrode described in claim 6.
